# EUROPÄISCHE PATENTSCHRIFT

(11) **EP 1 064 081 B1**
(45) Veröffentlichungstag und Bekanntmachung des Hinweises auf die Patenterteilung: **05.03.2003**
(21) Anmeldenummer: 99919039.0
(22) Anmeldetag: 05.03.1999
(51) Int. Cl.: B01D 53/88, B01D 53/86, B01J 35/04

(54) **KATALYSATORKÖRPER**
CATALYTIC CONVERTER BODY
CORPS DE POT CATALYTIQUE

(30) Priorität: 20.03.1998 DE 19812321
(43) Veröffentlichungstag der Anmeldung: 03.01.2001
(73) Patentinhaber: SIEMENS AKTIENGESELLSCHAFT, 80333 München (DE)
(72) Erfinder: SIGLING, Ralf, D-91083 Baiersdorf (DE)
(86) Internationale Anmeldenummer: DE9900600
(87) Internationale Veröffentlichungsnummer: WO99048597

(56) Entgegenhaltungen:
- EP-A- 0 262 558
- EP-A- 0 820 810
- WO-A-97/27385
- DE-A- 3 501 941
- US-A- 3 853 485
- US-A- 4 305 910
- US-A- 4 521 532
- PATENT ABSTRACTS OF JAPAN vol. 014, no. 171 (C-0706), 3. April 1990 (1990-04-03) & JP 02 021947 A (MITSUBISHI HEAVY IND LTD), 24. Januar 1990 (1990-01-24)

## Beschreibung

Die Erfindung bezieht sich auf einen Katalysatorkörper mit einer Einström- und einer Ausströmseite und mit einer Vielzahl von von der Einströmseite zur Ausströmseite durchströmbaren Längskanälen.

Ein Katalysatorkörper wird zur Reinigung von Abgas einer Verbrennungsanlage eingesetzt, beispielsweise zur Entfernung von Stickoxiden nach dem Verfahren der selektiven katalytischen Reaktion (SCR), von Kohlenwasserstoffen, Kohlenmonoxid und/oder Dioxinen aus dem Abgas. Eine Verbrennungsanlage ist beispielsweise eine Kesselanlage, ein kohle-, öl- oder gasbefeuertes Fossilkraftwerk, eine Gasturbine, oder ein Verbrennungsmotor, insbesondere ein Dieselmotor. Auch eine Müllverbrennungsanlage emittiert die genannten Schadstoffe. Die miteinander zu Reaktionen zu bringenden Reaktanden strömen durch Längskanäle von der Einströmseite zur Ausströmseite des Katalysatorkörpers durch diesen hindurch. Dabei läuft die katalysierte Reaktion im Kontakt der Reaktanden mit der Wandoberfläche ab. Unter einem Katalysatorkörper wird hier ein kompaktes Katalysatorelement oder ein aus mehreren Katalysatorelementen zusammengesetztes Modul verstanden.

Ein Maß für die katalytische Aktivität eines Katalysatorkörpers ist der sogenannte AP-Wert. Dieser ist definiert als das Verhältnis der geometrischen Oberfläche des Katalysatorkörpers zu seinem Raumvolumen (m²/m³). Um einen möglichst großen AP-Wert des Katalysatorkörpers zu erzielen - und damit ein möglichst geringes Raumvolumen des Katalysatorkörpers -, versucht man, den Katalysatorkörper so zu formen, daß er eine möglichst große Oberfläche hat. Eine Möglichkeit, dies zu erreichen ist, die Querschnitte der einzelnen Längskanäle klein zu machen bei gleichzeitig möglichst dünn gestalteten Wänden zwischen den Längskanälen.

Die Größe des Kanalquerschnitts der Längskanäle muß sich jedoch nach dem Einsatzort des Katalysatorkörpers richten. Der Einsatz eines Katalysatorkörpers mit Längskanälen kleinen Querschnitts zur Stickoxidminderung oder Dioxinminderung in einem Abgas einer Verbrennungsanlage ist dann problematisch, wenn dieses Abgas gleichzeitig sehr staubhaltig ist. In einer derartigen Anlage, einer sogenannten High-Dust-Anlage, werden bevorzugt Katalysatorkörper mit Längskanälen großen Querschnitts eingesetzt, da diese weniger anfällig gegen Verstopfen sind. Bei gleicher katalytischen Aktivität des gesamten Katalysatorkörpers ist das Raumvolumen eines Katalysatorkörpers mit Längskanälen großen Querschnitts jedoch größer als das eines Katalysatorkörpers mit Längskanälen kleinen Querschnitts. Wenn in einer High-Dust-Anlage ein Kätalysatorkörper mit Längskanälen kleinen Querschnitts eingesetzt wird, zum Beispiel weil im Abgaskanal der Anlage nicht genügend Raum für einen großen Katalysatorkörper vorhanden ist, dann bedeutet das ein entsprechend hohes Betriebsrisiko: Teilweise treten Verstopfungen von Katalysatorkörpern in derartigen Anlagen auf.

In dem Dokument JP-A-2.021.947, das sich ebenfalls mit dem Problem des Verstopfens der Längskanäle eines Katalysatorkörpers befaßt, ist ein Katalysatorkörper offenbart, dessen Einströmseite eine Vielzahl von Vertiefungen aufweist.

Der Erfindung liegt daher die Aufgabe zugrunde, einen Katalysatorkörper anzugeben, der den Vorteil eines hohen AP-Wertes mit Längskanälen kleinen Querschnitts mit einem geringen. Verstopfungsrisiko auch in staubhaltigen Abgasen verbindet.

Diese Aufgabe wird durch einen Katalysatorkörper gemäß Anspruch 1 gelöst, welcher eine Vielzahl erster Längskanäle und erfindungsgemäß zusätzlich eine geringere Anzahl zweiter Längskanäle enthält, wobei der Kanalquerschnitt der zweiten Längskanäle gtößer ist als der Kanalquerschnitt der ersten Längskanäle.

Die Erfindung geht dabei von der Überlegung aus, daß es insbesondere dann zu Verlegungen von Längskanälen kommt, wenn große Einzelpartikel - wie sogenannte "Popcornasche", die beispielsweise durch Fehlfunktion der Kohlebrenner eines Kohlekraftwerks entsteht, oder durch vom Abgas mitgenommene

Schmelzperlen, welche bei sogenannter Schmelzkammerfeuerung entstehen - auftreten, die nicht durch die ersten Längskanäle passen. Von diesen verlegten Längskanälen aus kommt es dann aufgrund vermehrter Ascheanlagerung leicht zu einer weiteren Verstopfung benachbarter Bereiche. Verhältnismäßig wenige große Einzelpartikel führen somit zum Verstopfen eines Großteils des Katalysatorkörpers. Dadurch, daß nur einige zweite Längskanäle mit großem Querschnitt ausgeführt werden, wird zum einen der Vorteil des hohen AP-Wertes nahezu nicht genommen, zum anderen wird ein freier Durchgang selbst für Einzelpartikel mit Übergröße geschaffen und dadurch ein Verstopfen sicher vermieden. Die Anzahl der zweiten Längskanäle, sowie deren Größe und Anordnung in der Wabenstruktur kann den Betriebsbedingungen des Einzelfalles angepaßt werden.

In einer vorteilhaften Ausgestaltung der Erfindung sind die Öffnungen der zweiten Längskanäle über die Einströmseite des Katalysatorkörpers verteilt und jeweils durch Bereiche mit regelmäßig angeordneten ersten Längskanälen beabstandet. Nicht durch die ersten Längskanäle passende große Einzelpartikel aus dem Abgas werden vom Gasstrom auf den regelmäßig auf der Einströmseite des Katalysatorkörpers angeordneten Öffnungen der ersten Längskanäle hin und her bewegt und finden bei obiger Ausgestaltung der Erfindung eine nahegelegene Öffnung eines zweiten Längskanals, durch die sie passen und die Einströmseite auf diese Weise verlassen können.

Bei Katalysatorkörpern üblicher Bauart liegt der Kanalquerschnitt der ersten Längskanäle zwischen 4 mm² und 70 mm². Mit ihnen wird ein günstiger AP-Wert bis über 900 m²/m³ erreicht. Der Kanalquerschnitt der zweiten Längskanäle ist zweckmäßigerweise so gewählt, daß im Gasstrom mitgeführte Einzelpartikel üblicher Größe durch die zweiten Längskanäle durchtreten können. Einer definitiven Festlegung des Querschnitts kann, muß jedoch nicht, eine Staubanalyse des Abgases vorausgehen. Die Staubanalyse liefert Angaben zur Korngrößenverteilung im Abgas und, über das Vorhandensein von Einzelpartikeln mit Übergröße (Popcornasche, Schmelzkammerperlen). Zwechmäßigerweise liegt der Kanalquerschnitt der zweiten Längskanäle zwischen 9 mm² und 200 mm². Bei der Wahl eines Querschnitts, der nicht um ein Vielfaches größer ist als derjenige der ersten Längskanäle, wird der AP-Wert des Katalysatorkörpers nur geringfügig herabgesetzt.

Ebenfalls um den AP-Wert des Katalysatorkörpers nur geringfügig herabzusetzen, wird die Anzahl der zweiten Längskanäle möglichst klein gewählt. Je nach Staub- und Partikelgehalt des Abgases beträgt die Anzahl der zweiten Längskanäle zweckmäßigerweise zwischen 10 und 500 pro m² Anströmfläche. Als Anströmfläche ist die zur Einströmrichtung eines Abgases senkrecht gelegene Einströmseite des Katalysatorkörpers gedacht.

In einer weiteren vorteilhaften Ausgestaltung der Erfindung weist die Einströmseite des Katalysatorkörpers mindestens eine Vertiefung auf und die zweiten Längskanäle sind jeweils im wesentlichen im Bereich einer solchen Vertiefung angeordnet. Die großen Einzelpartikel werden bei dieser Ausgestaltung der Erfindung vom anströmenden Gas in die Vertiefung der Einströmseite geblasen, wo sie von den zweiten Längskanälen größeren Kanalquerschnitts aufgenommen werden können und eine freie Passage durch den Katalysatorkörper finden. Die Vertiefung kann beispielsweise als eine örtliche Senke oder als Rille innerhalb der Einströmseite oder als Absenkung eines ebenen Flächenstücks auf der Einströmseite zu einer Seite hin ausgestaltet sein.

Eine aus fertigungstechnischer Sicht vorteilhafte Ausgestaltung der Einströmseite des Katalysatorkörpers wird dadurch erreicht, daß die Einströmseite als eine oder mehrere im wesentlichen ebene Flächen ausgebildet ist. Bei einem solchen Katalysatorkörper wird eine Vertiefung in der Einströmseite des Katalysatorkörpers gebildet, indem die Ebenen nicht senkrecht zur Einströmrichtung des Gases angeordnet sind, sondern dazu geneigt. Einzelpartikel werden daher unter dem Einfluß der Gasströmung entlang dieser geneigten Flächen jeweils zu den größeren (zweiten) Längskanälen abgeleitet.

Große Katalysatorkörper sind aus fertigungstechnischen Gründen vorteilhafterweise aus einer Anzahl von Katalysatorelementen zusammengesetzt. Sind die Einströmseiten aller oder vieler Katalysatorelemente eines Katalysatorkörpers zur Einströmrichtung geneigte Ebenen, ist es sinnvoll, die Katalysatorelemente in solcher Weise zu dem Katalysatorkörper zusammenzusetzen, daß die Vertiefungen der Einströmseiten der Katalysatorelemente einander zugewandt sind. Eine besonders effektive Ausbildung der Einströmseite des Katalysatorkörpers besteht darin, die Einströmseite annähernd rechteckiger Katalysatorelemente so zu gestalten, daß deren tiefster Punkt an einer Ecke der Einströmseite zu liegen kommt. Sind vier solcher Ecken benachbarter Katalysatorelemente aneinander zugewandt, ergeben sie eine trichterförmige Vertiefung, in die in einem anströmenden Gas enthaltenen große Einzelpartikel durch den Gasstrom hineingeblasen werden. Bei dieser Ausgestaltung der Einströmseite des Katalysatorkörpers genügt ein einziger zweiter Längskanal pro Katalysatorelement, um ein Verstopfen der Einströmseite durch große Partikel zu verhindern.

In weiterer vorteilhafter Ausführungsform der Erfindung befinden sich bei einem Katalysatorkörper mit einer Anzahl von Katalysatorelementen die zweiten Längskanäle außerhalb der Katalysatorelemente. Sie werden gebildet aus in Strömungsrichtung verlaufenden Längsrillen an der Außenwandung der Katalysatorelemente oder aus Freiräumen, die im Katalysatorkörper durch abgeschrägte Längskanten der einzelnen Katalysatorelemente entstehen. Oder sie sind zum Beispiel in eine die Katalysatorelemente verbindende Dichtungsmasse oder in ein sonstiges zwischen den Katalysatorelementen liegendes Material, wie zum Beispiel einem Metallrahmen eingearbeitet.

Durch diese Ausgestaltung entfällt eine Einarbeitung der zweiten Längskanäle in die einzelnen Katalysatorelemente.

Der Katalysatorkörper kann vorteilhafterweise ais Trägerkatalysator ausgebildet sein, bei dem ein Tragkörper mit einer katalytisch aktiven Schicht beschichtet ist. Alternativ kann vorteilhafterweise der Katalysatorkörper auch als Vollextrudat ausgebildet sein. In diesem Fall besteht der Katalysatorkörper ausschließlich aus Katalysatormaterial. Die Herstellung eines Vollextrudats kann mit Hilfe einer Extrudiermaschine erfolgen, die Formkörper aus einer weichen, plastischen Masse erzeugt, die anschließend verfestigt (z.B. calciniert) wird

Zum Abbau von Stickoxiden weist die dem Gas frei zugängliche Oberfläche jedes Kanals vorteilhafterweise die Materialien Titandioxid (TiO₂) zu 70 bis 95 Gew.-%, Wolframtrioxid (WO₃) und/oder Molybdäntrioxid (MoO₃) zu 5 bis 20 Gew.-% und Vanadinpentoxid (V₂O₅) zu weniger als 5 Gew.-% auf. Ein derartiger Katalysatorkörper wird auch als DeNOx-Katalysatorkörper bezeichnet.

Besonders vorteilhaft ist die Verwendung eines Katalysatorkörpers mit ersten und zweiten Längskanälen in Verbindung mit einem Rußbläser, der im Abgaskanal der Verbrennungsanlage in Strömungsrichtung des Abgases gesehen vor dem Katalysatorkörper angebracht ist. Der Rußbläser bläst in gewissen Zeitabständen aus einer Vielzahl von Düsen Druckluft, heißen Dampf oder ein ähnliches Medium mit hohem Druck auf oder über die gesamte Einströmseite des Katalysatorkörpers. Dadurch werden Staubablagerungen, die sich aus vom Abgas mitgeführtem Staub auf der Einströmseite gebildet haben, durch die Längskanäle geblasen. Nicht durch die ersten Längskanäle passende, vom Abgasstrom mit gefuhrte große Einzelpartikel werden durch den turbulenten Druckluft- oder Dampfstrom aus dem Rußbläser - mehr noch als durch den Abgasstrom selber - auf der Einströmseite des Katalysatorkörpers hin und her bewegt, sie finden zweite Längskanäle und können durch diese durch den Katalysatorkörper hindurch gelangen und somit dessen Einströmseite verlassen.

Ausführungsbeispiele der Erfindung werden anhand von 9 Figuren näher erläutert. Es zeigen:
FIG 1 eine Ansicht auf die Einströmseite eines Katalysatorkörpers mit zwei zweiten Längskanälen, welche große Einzelpartikel passieren lassen;
FIG 2 eine Ansicht auf die Einströmseite eines herkömmlichen Katalysatorkörpers mit darauf liegenden großen Einzelpartikeln;
FIG 3 eine perspektivische Ansicht auf die Einströmseite eines Katalysatorkörpers, welche eine Vertiefung aufweist. An der tiefsten Stelle der Einströmseite befindet sich ein zweiter Längskanal;
FIG 4 eine Draufsicht auf die Einströmseite eines aus Katalysatorelementen zusammengesetzten Katalysatorkörpers, in dem die mit zweiten Längskanälen bestückten Vertiefungen in Form von Längstälern angeordnet sind;
FIG 5 einen Schnitt durch den Katalysatorkörper gemäß Linie V-V in Figur 4;
FIG 6 eine perspektivische Ansicht auf die Einströmseite eines aus vier Katalysatorelementen zusammengesetzten Katalysatorkörpers;
FIG 7 eine perspektivische Ansicht auf die Einströmseite eines aus vier Katalysatorelementen zusammengesetzten Katalysatorkörpers die durch eine Dichtungsmasse voneinander beabstandet sind;
FIG 8 eine Draufsicht auf die Einströmseite eines aus zwölf Katalysatorelementen zusammengesetzten Katalysatorkörpers, bei dem sich die zweiten Längskanäle außerhalb der einzelnen Katalysatorelemente befinden; und
FIG 9 eine perspektivische Ansicht auf einen Katalysatorkörper in einem Abgaskanal einer Verbrennungsanlage mit einem vorgeschalteten Rußbläser.

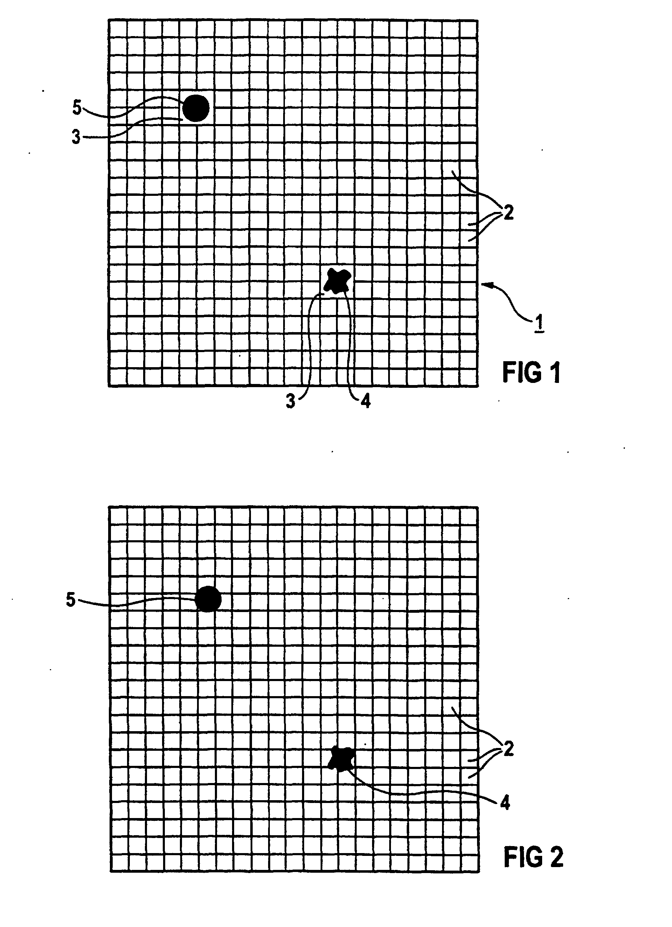

Bei einem Katalysatorkörper 1 gemäß Figur 1, der außer den ersten Längskanälen kleinen Querschnitts 2 auch zweite Längskanäle größeren Querschnitts 3 umfaßt, können große Einzelpartikel 4,5, in Figur 1 eine Schmelzkammerperle 5, die bei Verbrennungsanlagen mit heißer Schmelzkammerfeuerung entsteht und sogenannte Popcornasche 4, die bei Fehlfunktion eines Kohlebrenners auftritt, den Katalysatorkörper 1 durch die zweiten Längskanäle passieren. Die Anzahl der zweiten Längskanäle beträgt 88 pro m² Anströmfläche. Die Einzelpartikel werden durch das anströmende Gas so lange auf der Einströmseite bewegt, bis sie eine Öffnung eines zweiten Längskanals gefunden haben.

Ein herkömmlicher Katalysatorkörper gemäß Figur 2 mit lediglich ersten Längskanälen 2 verstopft bei Auftreten großer Einzelpartikel 4,5 im die Einströmseite des Katalysatorkörpers 1 anströmenden Gas. Die Einzelpartikel bleiben auf der Einströmseite liegen und können den Katalysatorkörper 1 nicht passieren.

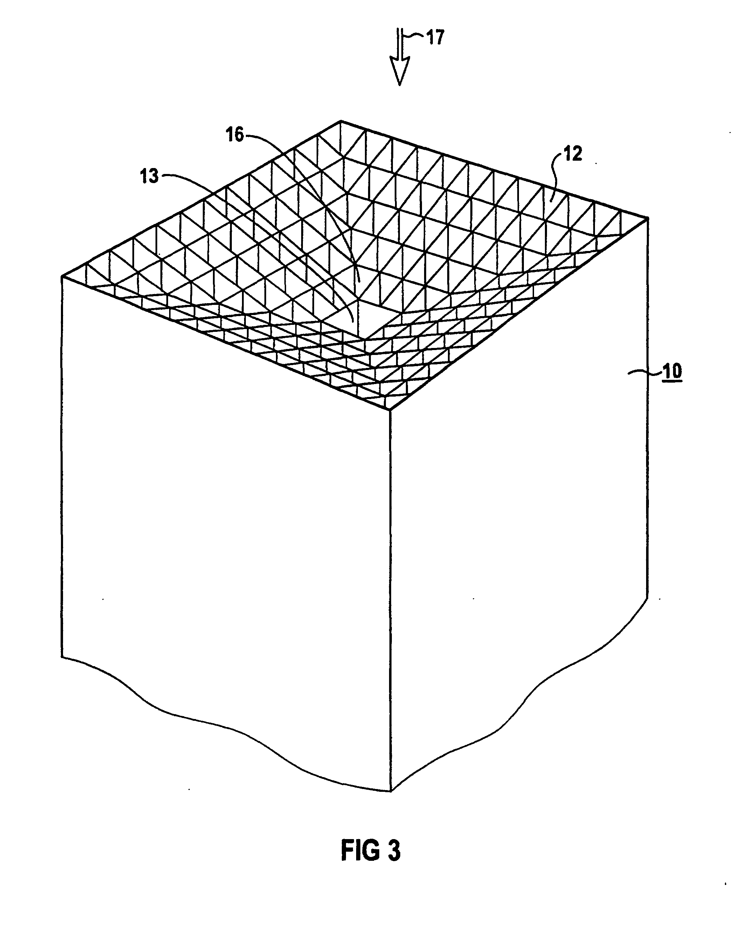

Figur 3 zeigt in perspektivischer Darstellung einen Katalysatorkörper 10, dessen Einströmseite eine Vertiefung 16 aufweist. Große Partikel, die von einem in Einströmrichtung 17 auf die Einströmseite des Katalysatorkörpers 10 zuströmenden Gas mitgeführt werden und nicht durch die ersten Längskanäle 12 des Katalysatorkörpers 10 passen, werden von dem anströmenden Gas in die Vertiefung 16 geblasen, wo sie einen Durchgang durch den Katalysatorkörper 10 mittels eines zweiten Längskanals 13 finden. Die ersten Längskanäle 12 haben einen Kanalquerschnitt von 36 mm² und der zweite Längskanal 13 einen Kanalquerschnitt von 144 mm².

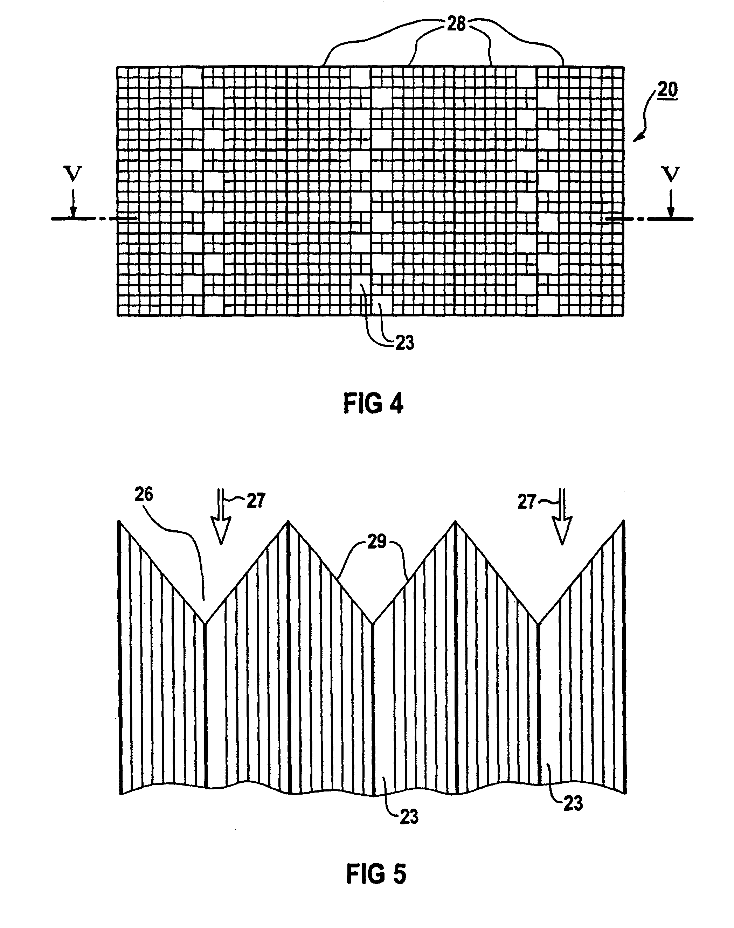

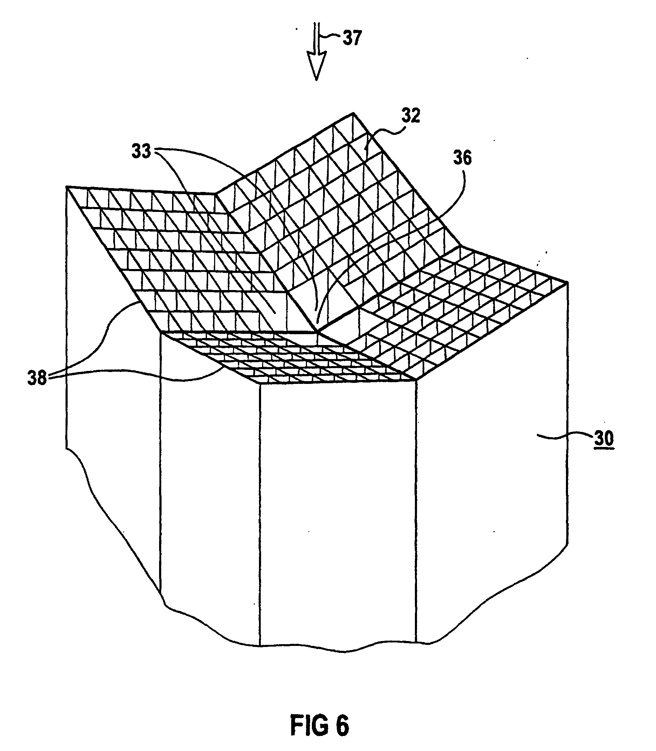

Im Ausführungsbeispiel gemäß Figur 4 und 5 ist ein Katalysatorkörper 20 aus baugleichen Katalysatorelementen 28 zusammengesetzt. Figur 5, die einen Schnitt durch den Katalysatorkörper 20 nach Figur 4 entlang der Linie V-V darstellt, zeigt, daß die Einströmseiten der Katalysatorelemente 28 Ebenen 29 sind, die gegenüber der Einströmrichtung 27 des einströmenden Gases geneigt sind. Durch diese Neigung der Einströmseiten der einzelnen Katalysatorelemente 27 entstehen Vertiefungen 26 in Form von gradlinigen Tälern in der Einströmseite des Katalysatorkörpers 20, an deren tiefsten Stellen zweite Längskanäle 23 ausgestaltet sind.

Im Ausführungsbeispiel gemäß Figur 6 sind vier Katalysatorelemente 38 zu einem Katalysatorkörper 30 zusammengesetzt. Die Einströmseiten der Katalysatorelemente 38 sind als Ebenen ausgebildet, die gegenüber der Einströmrichtung 37 des einströmenden Gases geneigt sind. Die Einströmseiten der vier Katalysatorelemente 38 sind so geneigt, daß sie als Vertiefung 36 einen Talkessel ausbilden, an dessen tiefster Stelle zweite Längskanäle 33 ausgestaltet sind. Der Katalysatorkörper 30 ist als ein Trägerkatalysator ausgebildet, welcher mit einer katalytisch aktiven Masse beschichtet ist.

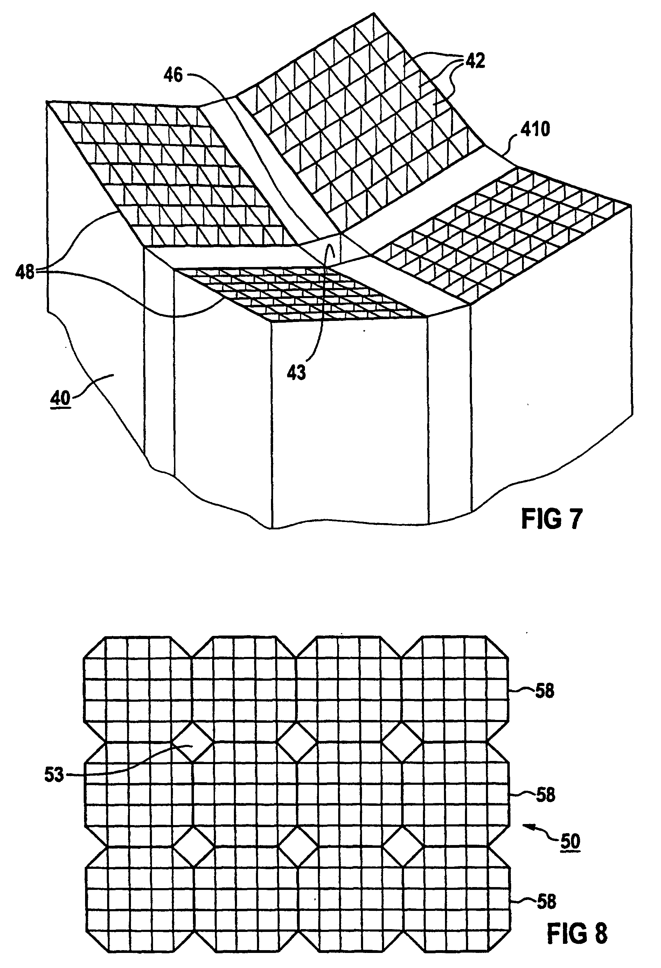

Im Ausführungsbeispiel gemäß Figur 7 ist der Katalysatorkörper 40 aus vier Katalysatorelementen 48 zusammengesetzt, die durch eine Dichtungsmasse 410 voneinander beabstandet sind. Die Katalysatorelemente sind aus einem Vollextrudat aus einer katalytisch aktiven Masse ausgebildet. Ein zweiter Längskanal 43 ist am tiefsten Punkt 46 der Einströmseite des Katalysatorkörpers 40 in der Masse 410 ausgestaltet. In die Katalysatorelemente 48 sind nur erste Längskanäle 42 eingearbeitet.

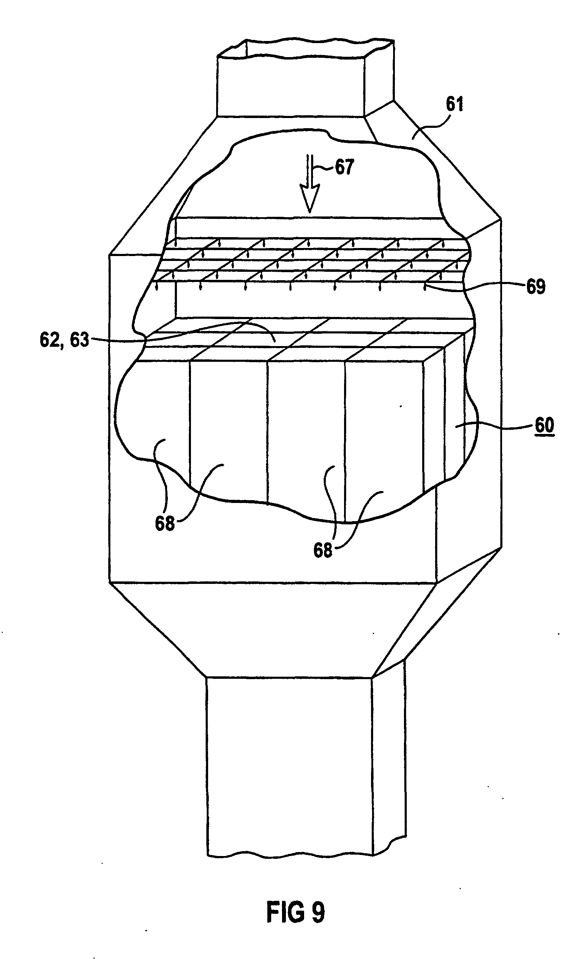

Figur 8 zeigt in der Draufsicht auf die Einströmseite ein weiteres Ausführungsbeispiel eines aus Katalysatorelementen 58 zusammengesetzten Katalysatorkörpers 50, bei dem zweite Längskanäle 53 außerhalb der Katalysatorelemente 58 durch die Form der Katalysatorelemente gebildet werden. Die Katalysatorelemente 58 sind aus einer katalytisch aktive Masse gebildet, welche die Materialien Titandioxid (TiO₂) zu 70 bis 95 Gew.-%, Wolframtrioxid (WO₃) und/oder Molybdäntrioxid (MoO₃) zu 5 bis 20 Gew.-% und Vanadinpentoxid (V₂O₅) zu weniger als 5 Gew.-% umfaßt.

Figur 9 zeigt in perspektivischer Darstellung einen Katalysatorkörper 60, der erste Längskanäle 62 und zweite Längskanäle 63 enthält, in einem Abgaskanal 61 einer Verbrennungsanlage eines Fossilkraftwerks. Über dem Katalysatorkörper 60, also in Strömungsrichtung 67 des Abgases gesehen vor dem Katalysatorkörper 60, befindet sich ein Rußbläser 69, der in gewissen Zeitabständen Druckluft oder heißen Dampf auf die gesamte Einströmseite des Katalysatorkörpers 60 bläst. In den durch die Druckluft oder Dampf auf der Einströmseite entstehenden Turbulenzen werden vom Abgasstrom mitgeführte große Einzelpartikel, die auf der Einströmseite liegengeblieben sind, hin und her bewegt. Auf diese Weise finden sie zweite Längskanäle 63, durch die sie die Einströmseite verlassen können.

## Patentansprüche

1. Katalysatorkörper (1, 10, 20, 30, 40, 50, 60) mit
a) einer Einströmseite, die mindestens eine Vertiefung aufweist,
b) einer Ausströmseite,
c) einer Vielzahl von von der Einströmseite in Richtung der Ausströmseite durchströmbaren ersten Längskanälen (2, 12, 32, 42, 62) eines festgelegten Kanalquerschnitts, **gekennzeichnet durch** eine geringere Anzahl jeweils im wesentlichen im Bereich der Vertiefung angeordnete zweite Längskanäle (3, 13, 23, 33, 43, 53, 63), wobei der Kanalquerschnitt der zweiten Längskanäle größer ist als der Kanalquerschnitt der ersten Längskanäle (2, 12, 32, 42, 62).

2. Katalysatorkörper (1, 10, 20, 30, 40, 50, 60) nach Anspruch 1, **dadurch gekennzeichnet, daß** die zweiten Längskanäle (3, 13, 43, 53, 63) jeweils durch Bereiche mit regelmäßig angeordneten ersten Längskanälen (2, 12, 42, 62) beabstandet sind.

3. Katalysatorkörper (10) nach Anspruch 1 oder 2, **dadurch gekennzeichnet, daß** der Kanalquerschnitt der ersten Längskanäle (12) zwischen 4 mm² und 70 mm² und der Kanalquerschnitt der zweiten Längskanäle (13) zwischen 9 mm² und 200 mm² beträgt.

4. Katalysatorkörper (1) nach einem der Ansprüche 1 bis 3, **dadurch gekennzeichnet, daß** die Anzahl der zweiten Längskanäle (3) zwischen 10 und 500 pro m² Anströmfläche beträgt.

5. Katalysatorkörper (10, 20, 30, 40) nach Anspruch 4, **dadurch gekennzeichnet, daß** die Einströmseite als mindestens eine im wesentlichen ebene Fläche ausgebildet ist, die zur Vertiefung (16, 26, 36, 46) geneigt ist.

6. Katalysatorkörper (20, 30, 40, 50, 60) nach einem der Ansprüche 1 bis 5, **dadurch gekennzeichnet, daß** er aus einer Anzahl von Katalysatorelementen (28, 38, 48, 58 ,68) zusammengesetzt ist.

7. Katalysatorkörper (40, 50) nach Anspruch 6, **dadurch gekennzeichnet, daß** die zweiten Längskanäle (43, 53) im wesentlichen außerhalb der Katalysatorelemente (48, 58) angeordnet sind.

8. Katalysatorkörper (30) nach einem der Ansprüche 1 bis 7, **dadurch gekennzeichnet, daß** er als ein Trägerkatalysator ausgebildet ist, welcher mit einer katalytisch aktiven Masse beschichtet ist.

9. Katalysatorkörper (40, 50) nach einem der Ansprüche 1 bis 7, **dadurch gekennzeichnet, daß** er als ein Vollextrudat aus einer katalytisch aktiven Masse ausgebildet ist.

10. Katalysatorkörper (30, 40, 50) nach einem der Ansprüche 8 oder 9, **dadurch gekennzeichnet, daß** die katalytisch aktive Masse die Materialien Titandioxid (TiO₂) zu 70 bis 95 Gew.-%, Wolframtrioxid (WO₃) und/oder Molybdäntrioxid (MoO₃) zu 5 bis 20 Gew.-% und Vanadinpentoxid (V₂O₅) zu weniger als 5 Gew.-% umfaßt.

11. Verwendung eines Katalysatorkörpers (60) nach einem der Ansprüche 1 bis 10 in einem Abgaskanal (61) einer Verbrennungsanlage, insbesondere eines Fossilkraftwerks, wobei im Abgaskanal (61) dem Katalysatorkörper (60) in Strömungsrichtung des Abgases ein Rußbläser (69) vorgeschaltet ist.

## Claims

1. Catalyst body (1, 10, 20, 30, 40, 50, 60) having
a) an inlet side which has at least one recess,
b) an outlet side,
c) a multiplicity of first longitudinal passages (2, 12, 32, 42, 62) of defined passage cross section, through which medium can flow from the inlet side towards the outlet side,
**characterized by** a smaller number of second longitudinal passages (3, 13, 23, 33, 43, 53, 63) which are each arranged substantially in the region of the recess, the passage cross section of the second longitudinal passages being larger than the passage cross section of the first longitudinal passages (2, 12, 32, 42, 62).

2. Catalyst body (1, 10, 20, 30, 40, 50, 60) according to Claim 1, **characterized in that** the second longitudinal passages (3, 13, 43, 53, 63) are each spaced apart by regions with regularly arranged first longitudinal passages (2, 12, 42, 62).

3. Catalyst body (10) according to Claim 1 or 2,
**characterized in that** the passage cross section of the first longitudinal passages (12) is between 4 mm² and 70 mm², and the passage cross section of the second longitudinal passages (13) is between 9 mm² and 200 mm².

4. Catalyst body (1) according to one of Claims 1 to 3, **characterized in that** the number of second longitudinal passages (3) is between 10 and 500 per m² of inflow area.

5. Catalyst body (10, 20, 30, 40) according to Claim 4, **characterized in that** the inlet side is designed as at least one substantially planar surface which is inclined towards the recess (16, 26, 36, 46).

6. Catalyst body (20, 30, 40, 50, 60) according to one of Claims 1 to 5, **characterized in that** it is composed of a number of catalytic elements (28, 38, 48, 58, 68).

7. Catalyst body (40, 50) according to Claim 6, **characterized in that** the second longitudinal passages (43, 53) are arranged substantially outside the catalytic elements (48, 58).

8. Catalyst body (30) according to one of Claims 1 to 7, **characterized in that** it is designed as a supported catalyst which is coated with a catalytically active compound.

9. Catalyst body (40, 50) according to one of Claims 1 to 7, **characterized in that** it is designed as an unsupported extrudate made from a catalytically active compound.

10. Catalyst body (30, 40, 50) according to one of Claims 8 or 9, **characterized in that** the catalytically active compound comprises the materials titanium oxide (TiO₂) in a proportion of from 70 to 95% by weight, tungsten trioxide (WO₃) and/or molybdenum trioxide (MoO₃) in a proportion of from 5 to 20 % by weight, and vanadium pentoxide (V₂O₅) in a proportion of less than 5% by weight.

11. Use of the catalyst body (60) according to one of Claims 1 to 10 in an off-gas duct (61) from a combustion plant, in particular a fossil-fired power plant, a soot blower (69) being connected upstream of the catalyst body (60), as seen in the direction of flow of the off-gas, in the off-gas duct (61).

## Revendications

1. Corps de pot catalytique (1, 10, 20, 30, 40, 50, 60), comportant
a) un côté admission, qui comporte au moins un renfoncement,
b) un côté sortie,
c) un grand nombre de premiers canaux longitudinaux (2, 12, 32, 42, 62), ayant une aire en section transversale parfaitement définie, et dans lesquels un courant peut passer du côté admission, dans la direction du côté sortie,
**caractérisé par** un nombre plus petit de deuxièmes canaux longitudinaux (3, 13, 23, 33, 43, 53, 63), disposés chacun pour l'essentiel dans la zone du renfoncement, l'aire en section transversale des deuxièmes canaux longitudinaux étant plus grande que l'aire en section transversale des premiers canaux longitudinaux (2, 12, 32, 42, 62).

2. Corps de pot catalytique (1, 10, 20, 30, 40, 50, 60) selon la revendication 1, **caractérisé en ce que** les deuxièmes canaux longitudinaux (3, 13, 43, 53, 63) sont écartés par des zones comportant des premiers canaux longitudinaux (2, 12, 42, 62) régulièrement disposés.

3. Corps de pot catalytique (10) selon la revendication 1 ou 2, **caractérisé en ce que** l'aire en section transversale des premiers canaux longitudinaux (12) est de 4 à 70 mm² et que l'aire en section transversale des deuxièmes canaux longitudinaux (13) est de 9 à 200 mm².

4. Corps de pot catalytique (1) selon l'une des revendications 1 à 3, **caractérisé en ce que** le nombre des deuxièmes canaux longitudinaux (3) est compris entre 10 et 500 par m² d'aire de surface d'admission.

5. Corps de pot catalytique (10, 20, 30, 40) selon la revendication 4, **caractérisé en ce que** le côté admission est configuré comme au moins une surface essentiellement plane, qui est inclinée vers le renfoncement (16, 26, 36, 46).

6. Corps de pot catalytique (20, 30, 40, 50, 60) selon l'une des revendications 1 à 5, **caractérisé en ce qu'**il est constitué d'un certain nombre d'éléments catalyseurs (28, 38, 48, 58, 68).

7. Corps de pot catalytique (40, 50) selon la revendication 6, **caractérisé en ce que** les deuxièmes canaux longitudinaux (43, 53) sont pour l'essentiel disposés à l'extérieur des éléments catalyseurs (48, 58).

8. Corps de pot catalytique (30) selon l'une des revendications 1 à 7, **caractérisé en ce qu'**il est configuré comme un catalyseur supporté, qui est revêtu d'une masse catalytiquement active.

9. Corps de pot catalytique (40, 50) selon l'une des revendications 1 à 7, **caractérisé en ce qu'**il est configuré comme un extrudat plein constitué d'une masse catalytiquement active.

10. Corps de pot catalytique (30, 40, 50) selon l'une des revendications 8 ou 9, **caractérisé en ce que** la masse catalytiquement active comporte les matériaux dioxyde de titane (TiO₂) en une quantité de 70 à 95 % en poids, trioxyde de tungstène (WO₃) et/ou trioxyde de molybdène (MoO₃) en une quantité de 5 à 20 % en poids, et pentoxyde de vanadium (V₂O₅) en une quantité inférieure à 5 % en poids.

11. Utilisation d'un corps de pot catalytique (60) selon l'une des revendications 1 à 10 dans une gaine d'effluent gazeux (61) d'une installation de combustion, en particulier une centrale à combustible fossile, où, dans la gaine de l'effluent gazeux (61), un purgeur de suie (69) est installé en amont du corps de pot catalytique (60) dans la direction d'écoulement de l'effluent gazeux.
